# FASCICULE DE BREVET EUROPEEN

(11) **EP 2 740 639 B1**
(45) Date de publication et mention de la délivrance du brevet: **20.06.2018**
(21) Numéro de dépôt: 13196558.4
(22) Date de dépôt: 10.12.2013
(51) Int. Cl.: B60S 1/52, B60S 1/38

(54) **Balai d'essuie glace**
Scheibenwischerarm
Windscreen-wiper blade

(30) Priorité: 10.12.2012 FR 1261817
(43) Date de publication de la demande: 11.06.2014
(73) Titulaire: Valeo Systèmes d'Essuyage, 78322 Le Mesnil Saint Denis (FR)
(72) Inventeur: Caillot, Gérald, 78720 CERNAY LA VILLE (FR)
(74) Mandataire: Callu Danseux, Violaine

(56) Documents cités:
- EP-A2- 1 209 050
- FR-A1- 2 695 606
- FR-A1- 2 704 817
- GB-A- 2 479 709
- US-A1- 2008 216 274

## Description

L'invention concerne un balai d'essuie glace pour vitre de véhicule automobile. Plus particulièrement, l'invention concerne un balai d'essuie glace comprenant un déflecteur aérodynamique et au moins un gicleur de liquide lave-glace intégré.

Lorsqu'un véhicule est en mouvement à grande vitesse, son ou ses balais d'essuie glace ainsi que leur bras d'essuyage sont soumis à des flux aérodynamiques pouvant soulever par endroit le balai d'essuie glace de la vitre. Ce soulèvement laisse une pellicule d'eau et/ou de liquide lave glace sur la surface à essuyer et gêne à terme la visibilité du conducteur. De plus, les jets de liquide lave glace projetés par le balai d'essuie glace sont eux aussi soumis a ces flux aérodynamiques ainsi qu'a des flux aérodynamiques issus des perturbations par le ou les balais d'essuie glace ainsi que leur bras d'essuyage, qui modifient leurs trajectoires. En conséquence, le liquide lave glace est mal réparti sur la vitre du véhicule, et son nettoyage est compromis.

On connaît un balai d'essuie glace de l'art antérieur 111 tel que représenté par la figure 1 (voir par exemple US-A-2008/0216274). Un tel balai d'essuie glace de l'art antérieur 111 comprend une lame d'essuyage 501, un déflecteur aérodynamique 901 situé au dessus de la lame d'essuyage 501 et au moins un gicleur de liquide lave-glace, ledit gicleur comprenant un canal de circulation de fluide 310, 320 et un orifice d'aspersion 350. Quand le balai d'essuie glace de l'art antérieur 111 est en opération, c'est-à-dire quand il essuie la vitre 3 du véhicule, il est soumis au flux aérodynamique 21 circulant en direction d'une face amont 231 du déflecteur aérodynamique 901, et au flux aérodynamique de re-circulation 41 circulant en direction opposée d'une face aval 241 du déflecteur aérodynamique 901. Le déflecteur aérodynamique 901 permet de dévier une partie des flux aérodynamiques 21 vers le haut. Ainsi, le déflecteur aérodynamique 901 est soumis à une force de pression aérodynamique qui tend à le plaquer, ainsi que le balai d'essuie glace de l'art antérieur 111, en direction de la vitre 3.

Cependant, le balai d'essuie glace de l'art antérieur 111 ne permet pas de protéger les jets de liquide lave-glace 33 des flux aérodynamiques 21, 41. La trajectoire des jets de liquide lave -glace 33 est perturbée, par exemple une partie du liquide lave-glace 33 n'atteint pas la vitre 3, et l'efficacité du balai d'essuie glace 111 est compromise.

Un des buts de la présente invention est de pallier cet inconvénient de l'art antérieur au moins partiellement, en proposant un balai d'essuie glace amélioré permettant de protéger les jets de liquide lave glace des flux aérodynamiques.

A cet effet, la présente invention a pour objet un dispositif de balai d'essuie glace pour vitre de véhicule automobile comprenant :
- une lame d'essuyage s'étendant longitudinalement,
- un déflecteur aérodynamique s'étendant longitudinalement au dessus de ladite lame d'essuyage,
- au moins un canal de circulation de fluide s'étendant longitudinalement, et comportant au moins un orifice d'aspersion,
caractérisé en ce que le balai comprend au moins une jupe latérale inférieure s'étendant longitudinalement sur un côté latéral de la lame d'essuyage et de l'orifice d'aspersion, l'orifice d'aspersion étant situé entre la lame d'essuyage et la jupe latérale inférieure. Selon l'invention, le canal de circulation de fluide est situé dans une partie latérale du déflecteur.

Selon une ou plusieurs caractéristiques du balai d'essuie glace, prise seule ou en combinaison :
- la au moins une jupe latérale inférieure est inclinée par rapport à la lame d'essuyage.
- la jupe latérale inférieure est inclinée d'un angle d'inclinaison compris entre 0° et 60°.
- l'orifice d'aspersion présente une direction d'aspersion dirigée sensiblement parallèlement à la lame d'essuyage.
- l'orifice d'aspersion présente une direction d'aspersion dirigée sensiblement vers la jupe inférieure latérale.
- la jupe latérale inférieure présente au moins un relief de projection du jet de liquide lave-glace suivant la direction d'aspersion.
- le déflecteur aérodynamique comprend une face amont et une face aval, caractérisé en ce que lesdites face amont et face aval présentent une forme en arc de cercle.

L'invention comprend aussi un procédé de fabrication de balai d'essuie glace, comprenant les étapes suivantes :
- on extrude un profilé comprenant au moins une jupe inférieure latérale et au moins un canal de circulation de fluide,
- on perce au moins un orifice d'aspersion dans le au moins un canal de circulation de fluide à travers la jupe inférieure latérale.

Le procédé de fabrication peut en outre comprendre les étapes suivantes :
- on extrude un profilé comprenant au moins une jupe inférieure latérale et au moins un canal de circulation de fluide,
- on dégage un accès à une partie inférieure du au moins un canal de circulation de fluide,
- on perce un orifice d'aspersion dans le au moins un canal de circulation de fluide,
- on barre à nouveau l'accès à la partie inférieure du au moins un canal de circulation fluide,
- l'accès à une partie inférieure du au moins un canal de circulation de fluide est dégagé en soulevant la au moins une jupe inférieure latérale.

D'autres caractéristiques et avantages de l'invention ressortiront de la description suivante, donnée à titre d'exemple, sans caractère limitatif, en regard des dessins annexés sur lesquels :
- la figure 1 représente une vue schématique d'une coupe transversale d'un balai d'essuie glace selon l'art antérieur
- la figure 2 représente une vue schématique d'une coupe transversale d'un balai d'essuie glace selon l'invention, le balai d'essuie glace comprenant un déflecteur aérodynamique, le déflecteur aérodynamique comportant deux jupes latérales inférieures, le balai d'essuie glace projetant du liquide lave glace en direction d'une vitre de véhicule,
- la figure 3 représente une vue schématique d'une coupe transversale d'un balai d'essuie glace en opération, le balai d'essuie glace projetant du liquide lave glace en direction d'une jupe latérale inférieure,
- la figure 4 représente un organigramme des différentes étapes d'un procédé de fabrication du déflecteur aérodynamique,
- la figure 5 illustre une première variante d'une étape de perçage d'un orifice d'aspersion dans un canal de circulation de fluide selon un procédé de fabrication du déflecteur aérodynamique,
- la figure 6a illustre une première étape d'une deuxième variante de l'étape de perçage de l'orifice d'aspersion dans le canal de circulation de fluide,
- la figure 6b illustre une deuxième étape de la deuxième variante de l'étape de perçage de l'orifice d'aspersion dans le canal de circulation de fluide,
- la figure 6c illustre une troisième étape de la deuxième variante de l'étape de perçage de l'orifice d'aspersion dans le canal de circulation de fluide,
- la figure 6d illustre une quatrième étape de la deuxième variante de l'étape de perçage de l'orifice d'aspersion dans le canal de circulation de fluide.

Sur ces figures, les éléments identiques portent les mêmes numéros de référence.

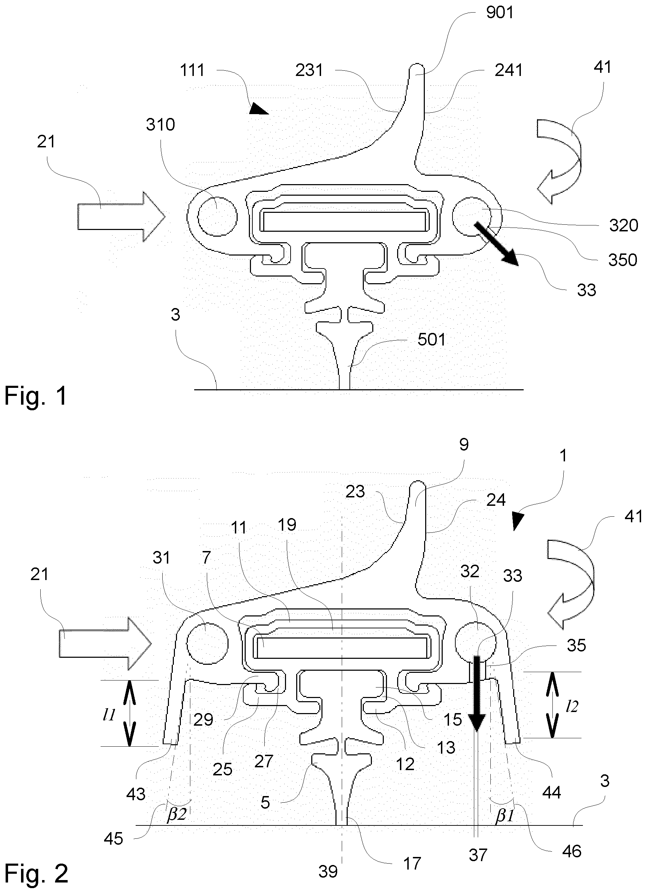

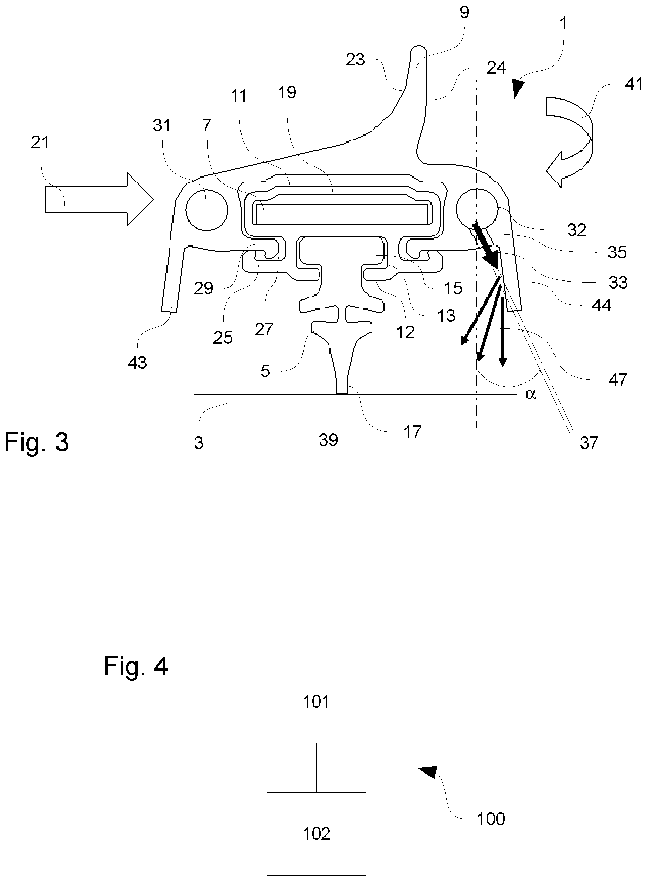

Dans la description de l'invention on adopte à titre non limitatif et en vue d'en simplifier la compréhension, les termes «vertical » , « horizontal » , « inférieur », « supérieur » , « bas », « haut » en référence à l'orientation du trièdre *L, V, T* indiqué sur les figures 2 et 3 qui correspond aux directions longitudinale, verticale et transversale du balai d'essuie glace 1. Par ailleurs, le terme « amont » est utilisé pour désigner une partie située la plus en amont dans un écoulement d'un flux aérodynamique auquel est soumis un balai d'essuie glace 1. Le terme « aval » est utilisé pour désigner la partie située le plus en aval dans l'écoulement du flux aérodynamique.

On considère un balai d'essuie glace 1 s'étendant dans la direction longitudinale *L.* Les figures 2 à 3 et 5 à 6d représentent des sections de transversales selon le plan vertical transversal (*V*, *T*) du balai d'essuie glace 1. Le balai d'essuie glace 1 est destiné à essuyer une vitre 3 de véhicule automobile, par exemple un pare-brise avant du véhicule. Sur les figures, la vitre 3 est représentée comme horizontale et parallèle aux directions longitudinale *L* et verticale *V.* En réalité, la vitre 3 peut être galbée.

Le balai d'essuie glace 1 comprend généralement une lame d'essuyage 5, au moins une lame de rigidification 7 et un déflecteur aérodynamique 9. Ces éléments 5, 7, 9 sont assemblés grâce à une monture 11 du balai d'essuie glace. La monture 11 est par exemple réalisée par moulage en matière plastique rigide ou semi-rigide.

Une partie inférieure du balai d'essuie glace 1 comprend la lame d'essuyage 5. A cet effet, la monture 11 présente deux nervures inférieures opposées 12 à section en « L » formant crochets qui délimitent une cavité inférieure 13 ouverte vers le bas. Cette cavité inférieure 13 reçoit une tête 15 de la lame d'essuyage. La lame d'essuyage 5 présente une raclette inférieure 17 destinée à être en contact avec la vitre 3 du véhicule. La lame d'essuyage 5 est classiquement en caoutchouc ou en matériau élastomère naturel ou synthétique réalisée par extrusion ou moulée.

Une partie centrale du balai d'essuie glace 1 comprend la lame de rigidification 7, de section transversale sensiblement rectangulaire, qui est par exemple insérée dans une partie supérieure de la monture 11. Pour cela, la monture 11 délimite un logement interne 19 creux situé à l'aplomb de la cavité inférieure 13. Le logement interne 19 présente un contour sensiblement rectangulaire dans lequel est reçue la lame de rigidification 7. Cette lame de rigidification 7 est avantageusement reçue avec un jeu de manière à permettre de légers déplacements relatifs notamment selon la direction longitudinale afin de permettre une flexion du balai d'essuie glace 1. Elle constitue en association avec la monture 11, une structure du balai d'essuie glace 1 et confère au balai d'essuie glace 1 son élasticité dans le plan vertical et longitudinal lui permettant de s'adapter à la conformation et notamment au galbe de la face externe ou face supérieure de la vitre 3 à essuyer. La lame de rigidification 7 est par exemple réalisée en acier.

Une partie supérieure du balai d'essuie glace comprend le déflecteur aérodynamique 9. Le déflecteur aérodynamique 9 permet de protéger le balai d'essuie glace de flux aérodynamiques 21 qui s'écoulent le long de la vitre 3 à essuyer lorsque le véhicule est en mouvement. Il permet notamment de ralentir les flux aérodynamiques et d'exercer une pression sur ce dernier et donc sur le balai d'essuie glace 1 qui le plaque contre la vitre 3.

Le déflecteur aérodynamique 9 peut comporter une face amont 23 et une face aval 24. Les flux aérodynamiques 21 sont ralentis et déviés par la face amont 23il en résulte que le balai d'essuie glace 1 subit une force de pression aérodynamique qui tend à plaquer le déflecteur aérodynamique 9 et le balai d'essuie glace 1 en direction de la vitre 3.

Selon l'exemple illustré, la section transversale de la face amont 23 ainsi que la section transversale de la face aval 24 présentent des formes sensiblement en arc de cercle. D'autres formes sont bien entendu possibles, par exemple les faces amont 23 et aval 24 peuvent être sensiblement droites, formant un plan incliné.

Le déflecteur 9 peut néanmoins ne pas comporter de face amont 23 et face aval 24 et simplement avoir une forme plane sur le dessus ou légèrement profilée et permettant un ralentissement suffisant des flux aérodynamiques pour plaquer le balai d'essuie glace 1 contre la vitre 1

Le déflecteur aérodynamique 9 est par exemple réalisé par extrusion d'un matériau synthétique rigide ou souple.

Le déflecteur aérodynamique 9 est assemblé à la monture 11. Pour cela, la monture 11 comprend par exemple deux nervures latérales opposés 25 à section en « L » formant crochets qui délimitent des évidements latéraux 27. Le déflecteur aérodynamique présente des saillies latérales opposées 29 à section en « L » formant crochets. Les saillies latérales opposées 29 sont reçues dans les évidements latéraux 27 avec un jeu de manière à permettre de légers déplacements relatifs notamment selon la direction longitudinale. Les crochets des nervures latérales 25 et les crochets des saillies latérales 29 sont en direction opposée. Ainsi déflecteur 9 et la monture 11 restent fermement assemblés.

Le balai d'essuie glace 1 comprend en outre au moins un canal de circulation de fluide 31, 32 apte à permettre la circulation de liquide lave glace 33 représenté par une flèche pleine. Selon les exemples représentés par les figures 2 et 3, le balai d'essuie glace 1 comprend deux canaux de circulation 31, 32. Au moins un des canaux de circulation de fluide 31, 32 comprend au moins un orifice d'aspersion 35. L'orifice d'aspersion 35 permet au liquide lave glace 33 d'être projeté à l'extérieur du balai d'essuie glace 1. De préférence, le canal de circulation de fluide 31 comprend une pluralité d'orifices d'aspersion 35 répartis longitudinalement. Selon les exemples représentés, seul un des canaux de circulation 31 comprend un orifice d'aspersion 35 visible. L'orifice d'aspersion 35 est dirigé sensiblement vers le bas, c'est-à-dire en direction de la vitre 3. Plus particulièrement, l'orifice d'aspersion 35 présente une direction d'aspersion 37 représentée par une ligne double. Cette direction d'aspersion 37 peut avoir un angle *α* (visible sur la figure 3) avec un axe vertical 39 de la lame d'essuyage 5. L'axe vertical 39 de la lame d'essuyage 5 est représenté en ligne en tirets, pour une meilleure compréhension, cet axe vertical 39 est reporté par translation selon l'axe transversal *T* à différents endroits des figures. Cet angle *α* est aigue par exemple compris entre 0° et 45°. Sur la figure 2, l'angle *α* est 0°, le jet de liquide lave glace 33 est projeté parallèlement à la lame d'essuyage 5 et directement vers la vitre 3.

Dans l'exemple représenté par les figures 2 et 3, le déflecteur aérodynamique 9 comprend deux canaux de circulation 31, 32 positionnés de part et d'autre de la monture 11. Selon une première variante, un seul canal de circulation de fluide 31, 32 est relié à l'alimentation en liquide lave glace 33 (non représentée). Dans ce cas, le balai d'essuie glace 1 est de type mono rampe. Selon l'exemple illustré, le canal de circulation de fluide aval 32 est relié à l'alimentation.

Selon une deuxième variante, les deux canaux de circulation 31, 32 sont reliés à une ou des alimentations en liquide lave glace 33 (non représentée). Dans ce cas, le balai d'essuie glace 1 est de type bi rampe. Les deux canaux de circulation 31, 32 présentent chacun au moins un orifice d'aspersion 35. Les directions d'aspersion 37 respectives de ces orifices d'aspersion 35 peuvent être différentes.

Avantageusement, un unique modèle de déflecteur aérodynamique 9 est extrudé avec deux canaux de circulation 31, 32 de liquide lave-glace 33. Ainsi, ce modèle unique peut être utilisé pour des balais d'essuie glace mono rampe ou bi rampe. On réduit de ce fait les coûts de fabrication.

Le balai d'essuie glace 1 comprend un déflecteur aérodynamique 9 amélioré permettant non seulement de guider l'écoulement des flux aérodynamiques de façon à ce que le balai d'essuie glace 1 reste bien en contact avec la vitre 3, mais aussi il permet de protéger les jets de liquide lave glace 33 des flux aérodynamiques 21, 41 côté amont et côté aval. En effet, les flux aérodynamiques 21 déviés par la face amont 23 du déflecteur aérodynamique 9 re-circulent du côté de la face aval 24. La re-circulation des flux aérodynamique est représenté par la flèche courbe 41.

Pour cela, le déflecteur aérodynamique 9 comprend au moins une jupe latérale inférieure 43, 44 s'étendant sur un côté longitudinal de la lame d'essuyage 5et de l'orifice d'aspersion 35. Dans l'exemple illustré, le déflecteur aérodynamique 9 comprend deux jupes latérales inférieures 43, 44 s'étendant de part et d'autre de la lame d'essuyage 5. Les orifices d'aspersion 35 sont ainsi situés entre la lame d'essuyage 5 et les jupes latérales inférieures 43, 44. Par conséquent, le jet de liquide lave-glace 33 projeté depuis les orifices d'aspersion 35 est protégé des flux aérodynamiques 21, 41. Le liquide lave-glace 33 impacte la vitre 3 et le nettoyage est ainsi amélioré.

Les jupes latérales inférieures 43, 44 sont dirigées dans une direction d'inclinaison 45, 46 opposée à la lame d'essuyage 5. La direction d'inclinaison 45, 46 est représentée par une ligne alternant tirets et pointillés. La direction d'inclinaison 45, 46 fait un angle d'inclinaison *β₁, β₂* avec l'axe vertical 39 de la lame d'essuyage. Cet angle d'inclinaison *β₁, β₂* est compris entre 0° et 60°. L'angle d'inclinaison *β₁, β₂* est décidé en fonction de l'efficacité de lavage et des performances aérodynamiques souhaitées. De préférence, l'angle *β₁, β₂* est non nul, la jupe latérale inférieure 43, 44 est inclinée par rapport à la lame d'essuyage 5.

La jupe latérale inférieure 43, 44 présente une longueur *l₁, l₂,* par exemple comprise entre 1 et 5 mm de sorte que l'extrémité de la jupe latérale inférieure 43, 44 ne rentre pas en contact avec la vitre 3 et ce malgré le plaquage de du balai d'essuie glace du fait des flux aérodynamiques et également de l'usure de la raclette inférieure 17 avec le temps. Cette longueur *l₁, l₂* est décidée en fonction de l'efficacité de lavage et des performances aérodynamiques souhaitées.

Selon une variante représentée par la figure 2, les orifices d'aspersion 35 sont dirigés sensiblement parallèlement à l'axe vertical de la lame d'essuyage. Ainsi les jets de liquide 33 protégés des flux aérodynamiques 21, 41 sont dirigés sensiblement perpendiculairement à la vitre 3 du véhicule.

Selon une autre variante représentée par la figure 3, les orifices d'aspersion 35 sont dirigés en direction de la jupe latérale inférieure aval 44. Ainsi, les jets de liquide 33 sont projetés sur la jupe latérale inférieure aval 44. Quand les jets de liquide 33 impactent la jupe latérale inférieure aval 44, il explose dans une pluralité de directions 47 avant d'impacter la vitre 3. Ainsi le liquide lave glace est réparti sur une plus grande surface de la vitre 3, ce qui améliore le nettoyage de la vitre 3.

Quand le balai d'essuie glace est de type bi rampe, alors les jets de liquide provenant des orifices du canal de circulation de fluide amont 31 sont projetés en direction de la jupe latérale inférieure amont 43.

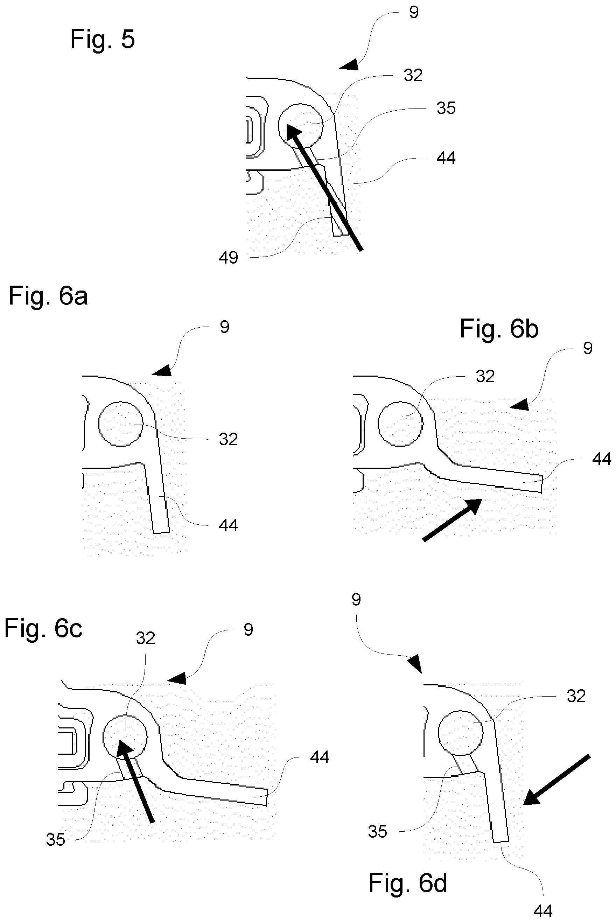

Selon une autre variante représentée par la figure 5, la jupe latérale inférieure 43, 44 (seule une jupe latérale inférieure est représentée sur cette figure 5) peut présenter un relief de projection 49 dirigé selon la même direction d'aspersion 37. Le jet de liquide 33 est donc projeté en direction du relief de projection 49. A son contact, il explose dans une pluralité de directions (non représenté), ainsi le liquide lave glace est réparti sur une plus grande surface de la vitre 3, ce qui améliore le nettoyage de la vitre 3 en évitant l'apparition de stries. Le relief de projection 49 comprend par exemple un trou.

Avantageusement, et comme représenté sur les figures 2 et 3, le déflecteur aérodynamique 9 comprend deux jupes latérales inférieures 43, 44 s'étendant longitudinalement de part et d'autre de la lame d'essuyage 5. Une jupe latérale inférieure est ainsi située en amont 43, et une jupe latérale inférieure est située en aval 44. Ainsi un modèle unique de déflecteur aérodynamique 9 peut être utilisé pour les balais d'essuie glace 1 de type bi rampes et de type mono rampe. On réduit ainsi les coûts de fabrication.

La jupe latérale inférieure amont 43 et la jupe latérale inférieure aval 44 peuvent présenter des angles d'inclinaisons, respectivement *β₁, β₂,* différents. Ces angles d'inclinaison *β₁, β₂* sont décidés en fonction de l'efficacité de lavage et des performances aérodynamiques souhaitées. La jupe latérale inférieure amont 43 et la jupe latérale inférieure aval 44 peuvent présenter des longueurs, respectivement *l₁, l₂,* différentes. Ces longueurs *l₁, l₂* sont décidées en fonction de l'efficacité de lavage et des performances aérodynamiques souhaitées.

L'invention concerne aussi un procédé de fabrication 100 (figure 4) de déflecteur aérodynamique 9.

Lors d'une première étape 101 du procédé de fabrication du déflecteur aérodynamique 9, on extrude un profilé comprenant le déflecteur aérodynamique 9, au moins une jupe inférieure latérale 43, 44 et au moins un canal de circulation de fluide 31.

Lors d'une deuxième étape 102 on perce au moins un orifice d'aspersion 35 dans au moins un canal de circulation de fluide 31. A cette étape du procédé, on note que la jupe latérale inférieure 43, 44 barre l'accès à la partie inférieure du canal de circulation de fluide 31 et empêche celui-ci d'être percé directement.

Selon un premier mode de réalisation de la deuxième étape 102 (voir figure 5), on réalise simultanément au perçage d'au moins un orifice d'aspersion 35, un relief de projection 49.

Par conséquent, on perce l'orifice d'aspersion 35 à travers la jupe latérale inférieure 43, 44. Ce faisant, on perce aussi un trou dans la jupe latérale inférieure 43, 44. En effet, la jupe latérale inférieure 43, 44 barre l'accès au canal de circulation de fluide 32 et empêche celui-ci d'être percé directement. L'orifice d'aspersion 35 et le trou de la jupe latérale inférieure 43, 44 présente la même direction d'aspersion 37. Le trou ainsi percé forme le relief de projection 49. La direction d'aspersion 37 de l'orifice d'aspersion 35 et du trou est opposée à la lame d'essuyage 5. On perce l'orifice d'aspersion 35 et le trou par exemple grâce à un laser. De préférence, on perce une pluralité d'orifices d'aspersion 35 et de trous sur la longueur d'au moins un canal de circulation de fluide 32. Percer un seul canal de circulation de fluide 31 permettra de réaliser un balai d'essuie glace mono rampe. Percer les deux canaux de circulation 32 permettra de réaliser un balai d'essuie glace bi rampe.

Selon un second mode de réalisation de la deuxième étape 102 (voir figures 6a à 6d), on dégage un accès à une partie inférieure du canal de circulation de fluide 32, par exemple on soulève la jupe latérale inférieure 43, 44 (figure 6a) grâce à une barrière mobile (non représentée). Ainsi dégagée, la partie inférieure du canal de circulation de fluide 32 est directement accessible (figure 6b). Puis on perce un orifice 35 dans le canal de circulation de fluide 32 selon une direction 37 (figure 6c). Enfin, on barre à nouveau l'accès au canal de circulation de fluide 32, par exemple en retirant la barrière mobile (figure 6d).

On comprend donc qu'un balai d'essuie glace 1 comprenant au moins une jupe latérale inférieure 43, 44 permet de protéger le jet de liquide lave glace 33 des flux aérodynamiques 21, 41 s'écoulant à proximité de la vitre 3 du véhicule quand le véhicule est en mouvement. Ainsi le liquide lave glace peut atteindre la vitre et le lavage est amélioré.

De plus, le jet de liquide lave glace 33 peut être dirigé en direction de la jupe latérale inférieure 43, 44. Au contact de la jupe latérale inférieure 43, 44, le jet de liquide lave glace 33 explose dans une pluralité de directions. Le liquide lave glace est ainsi mieux réparti sur la vitre 3 et le lavage est encore amélioré.

## Revendications

1. Balai d'essuie glace (1) pour vitre (3) de véhicule automobile comprenant :
- une lame d'essuyage (5) s'étendant longitudinalement,
- un déflecteur aérodynamique (9) s'étendant longitudinalement au dessus de ladite lame d'essuyage (5),
- au moins un canal de circulation de fluide (31, 32) s'étendant longitudinalement, et comportant au moins un orifice d'aspersion (35), ledit au moins un canal de circulation de fluide (31, 32) étant situé dans une partie latérale du déflecteur aérodynamique (9),
**caractérisé en ce que** le balai comprend au moins une jupe latérale inférieure (43, 44) s'étendant longitudinalement sur un côté latéral de la lame d'essuyage (5) et de l'orifice d'aspersion (35), l'orifice d'aspersion (35) étant situé entre la lame d'essuyage (5) et la jupe latérale inférieure (43, 44).

2. Balai d'essuie glace (1) selon la revendication 1, **caractérisé en ce que** la au moins une jupe latérale inférieure (43, 44) est inclinée par rapport à la lame d'essuyage (5).

3. Balai d'essuies glace (1) selon la revendication 2, **caractérisé en ce que** la jupe latérale inférieure (43, 44) est inclinée d'un angle d'inclinaison (β₁, β₂) compris entre 0° et 60°.

4. Balai d'essuies glace (1) selon l'une des revendications précédentes, **caractérisé en ce que** l'orifice d'aspersion (35) présente une direction d'aspersion (37) dirigée sensiblement parallèlement à la lame d'essuyage.

5. Balai d'essuies glace (1) selon l'une des revendications 1 à 3, **caractérisé en ce que** l'orifice d'aspersion (35) présente une direction d'aspersion (37) dirigée sensiblement vers la jupe inférieure latérale (43, 44).

6. Balai d'essuies glace (1) selon l'une des revendications précédentes, **caractérisé en ce que** la jupe latérale inférieure (43, 44) présente au moins un relief de projection (49) du jet de liquide lave-glace (33) suivant la direction d'aspersion (37).

7. Balai d'essuies glace (1) selon l'une des revendications précédentes, **caractérisé en ce que** le déflecteur aérodynamique comprend une face amont (23) et une face aval (24), et que lesdites face amont (23) et face aval (24) présentent une forme en arc de cercle.

8. Procédé de fabrication d'un balai d'essuie glace (1) selon l'une des revendications 1 à 7, comprenant les étapes suivantes :
- on extrude un profilé comprenant au moins une jupe inférieure latérale (43, 44) et au moins un canal de circulation de fluide (31, 32),
- on perce au moins un orifice d'aspersion (35) dans le au moins un canal de circulation de fluide (31, 32) à travers la jupe inférieure latérale (43, 44).

9. Procédé de fabrication d'un balai d'essuie glace (1) selon l'une des revendications 1 à 7, comprenant les étapes suivantes:
- on extrude un profilé comprenant au moins une jupe inférieure latérale (43, 44) et au moins un canal de circulation de fluide (31, 32),
- on dégage un accès à une partie inférieure du au moins un canal de circulation de fluide (31,32),
- on perce un orifice d'aspersion (35) dans le au moins un canal de circulation de fluide (31,32),
- on barre à nouveau l'accès à la partie inférieure du au moins un canal de circulation de fluide (31, 32).

10. Procédé de fabrication d'un balai d'essuie glace (1) selon la revendication 8, dans lequel l'accès à une partie inférieure du au moins un canal de circulation de fluide (31, 32) est dégagé en soulevant la au moins une jupe inférieure latérale (43, 44).

## Patentansprüche

1. Scheibenwischerarm (1) für eine Scheibe (3) eines Kraftfahrzeugs, welcher umfasst:
- ein Wischblatt (5), das sich in Längsrichtung erstreckt,
- einen aerodynamischen Deflektor (9), der sich oberhalb des Wischblattes (5) in Längsrichtung erstreckt,
- wenigstens einen Fluidzirkulationskanal (31, 32), der sich in Längsrichtung erstreckt und wenigstens eine Spritzöffnung (35) aufweist, wobei sich der wenigstens eine Fluidzirkulationskanal (31, 32) in einem seitlichen Teil des aerodynamischen Deflektors (9) befindet,
**dadurch gekennzeichnet, dass** der Arm wenigstens eine untere seitliche Schürze (43, 44) umfasst, die sich in Längsrichtung auf einer lateralen Seite des Wischblattes (5) und der Spritzöffnung (35) erstreckt, wobei sich die Spritzöffnung (35) zwischen dem Wischblatt (5) und der unteren seitlichen Schürze (43, 44) befindet.

2. Scheibenwischerarm (1) nach Anspruch 1, **dadurch gekennzeichnet, dass** die wenigstens eine untere seitliche Schürze (43, 44) bezüglich des Wischblattes (5) geneigt ist.

3. Scheibenwischerarm (1) nach Anspruch 2, **dadurch gekennzeichnet, dass** die untere seitliche Schürze (43, 44) unter einem Neigungswinkel (β₁, β₂) geneigt ist, der zwischen 0° und 60° liegt.

4. Scheibenwischerarm (1) nach einem der vorhergehenden Ansprüche, **dadurch gekennzeichnet, dass** die Spritzöffnung (35) eine Spritzrichtung (37) aufweist, die im Wesentlichen parallel zu dem Wischblatt verläuft.

5. Scheibenwischerarm (1) nach einem der Ansprüche 1 bis 3, **dadurch gekennzeichnet, dass** die Spritzöffnung (35) eine Spritzrichtung (37) aufweist, die im Wesentlichen zu der unteren seitlichen Schürze (43, 44) hin gerichtet ist.

6. Scheibenwischerarm (1) nach einem der vorhergehenden Ansprüche, **dadurch gekennzeichnet, dass** die untere seitliche Schürze (43, 44) in der Spritzrichtung (37) wenigstens ein Spritzrelief (49) für den Strahl der Scheibenwaschflüssigkeit (33) aufweist.

7. Scheibenwischerarm (1) nach einem der vorhergehenden Ansprüche, **dadurch gekennzeichnet, dass** der aerodynamische Deflektor eine Anströmseite (23) und eine Abströmseite (24) umfasst, und dass die Anströmseite (23) und die Abströmseite (24) eine Kreisbogenform aufweisen.

8. Verfahren zur Herstellung eines Scheibenwischerarmes (1) nach einem der Ansprüche 1 bis 7, welches die folgenden Schritte umfasst:
- es wird ein Profilteil extrudiert, das wenigstens eine untere seitliche Schürze (43, 44) und wenigstens einen Fluidzirkulationskanal (31, 32) umfasst,
- es wird wenigstens eine Spritzöffnung (35) durch die untere seitliche Schürze (43, 44) hindurch in den wenigstens einen Fluidzirkulationskanal (31, 32) gebohrt.

9. Verfahren zur Herstellung eines Scheibenwischerarmes (1) nach einem der Ansprüche 1 bis 7, welches die folgenden Schritte umfasst:
- es wird ein Profilteil extrudiert, das wenigstens eine untere seitliche Schürze (43, 44) und wenigstens einen Fluidzirkulationskanal (31, 32) umfasst,
- es wird ein Zugang zu einem unteren Teil des wenigstens einen Fluidzirkulationskanals (31, 32) freigelegt,
- es wird eine Spritzöffnung (35) in den wenigstens einen Fluidzirkulationskanal (31, 32) gebohrt,
- der Zugang zu dem unteren Teil des wenigstens einen Fluidzirkulationskanals (31, 32) wird wieder verschlossen.

10. Verfahren zur Herstellung eines Scheibenwischerarmes (1) nach Anspruch 8, wobei der Zugang zu einem unteren Teil des wenigstens einen Fluidzirkulationskanals (31, 32) freigelegt wird, indem die wenigstens eine untere seitliche Schürze (43, 44) angehoben wird.

## Claims

1. Windscreen wiper (1) for a motor vehicle window (3), comprising:
- a longitudinally extending wiper blade (5),
- an aerodynamic deflector (9) extending longitudinally above said wiper blade (5),
- at least one longitudinally extending fluid circulation duct (31, 32) having at least one spraying orifice (35), said at least one fluid circulation duct (31, 32) being located in a lateral part of the aerodynamic deflector (9),
**characterized in that** the wiper comprises at least one lower lateral skirt (43, 44) extending longitudinally on a lateral side of the wiper blade (5) and of the spraying orifice (35), the spraying orifice (35) being located between the wiper blade (5) and the lower lateral skirt (43, 44).

2. Windscreen wiper (1) according to Claim 1, **characterized in that** the at least one lower lateral skirt (43, 44) is inclined with respect to the wiper blade (5).

3. Windscreen wiper (1) according to Claim 2, **characterized in that** the lower lateral skirt (43, 44) is inclined at an inclination angle (β₁, β₂) of between 0° and 60°.

4. Windscreen wiper (1) according to one of the preceding claims, **characterized in that** the spraying orifice (35) has a spraying direction (37) directed approximately parallel to the wiper blade.

5. Windscreen wiper (1) according to one of Claims 1 to 3, **characterized in that** the spraying orifice (35) has a spraying direction (37) directed approximately towards the lower lateral skirt (43, 44).

6. Windscreen wiper (1) according to one of the preceding claims, **characterized in that** the lower lateral skirt (43, 44) has at least one relief (49) for projecting the jet of windscreen washer liquid (33) in the spraying direction (37).

7. Windscreen wiper (1) according to one of the preceding claims, **characterized in that** the aerodynamic deflector comprises an upstream face (23) and a downstream face (24), and **in that** said upstream face (23) and downstream face (24) are in the form of circular arcs.

8. Method for manufacturing a windscreen wiper (1) according to Claims 1 to 7, comprising the following steps:
- a profiled element comprising at least one lower lateral skirt (43, 44) and at least one fluid circulation duct (31, 32) is extruded,
- at least one spraying orifice (35) is pierced into the at least one fluid circulation duct (31, 32) through the lower lateral skirt (43, 44).

9. Method for manufacturing a windscreen wiper (1) according to Claims 1 to 7, comprising the following steps:
- a profiled element comprising at least one lower lateral skirt (43, 44) and at least one fluid circulation duct (31, 32) is extruded,
- access is opened up to a lower part of the at least one fluid circulation duct (31,32),
- a spraying orifice (35) is pierced into the at least one fluid circulation duct (31,32),
- the access to the lower part of the at least one fluid circulation duct (31, 32) is barred again.

10. Method for manufacturing a windscreen wiper (1) according to Claim 8, wherein the access to a lower part of the at least one fluid circulation duct (31, 32) is opened up by lifting the at least one lower lateral skirt (43, 44).
